# EUROPÄISCHE PATENTSCHRIFT

(11) **EP 1 864 737 B1**
(45) Veröffentlichungstag und Bekanntmachung des Hinweises auf die Patenterteilung: **01.08.2012**
(21) Anmeldenummer: 07011103.4
(22) Anmeldetag: 06.06.2007
(51) Int. Cl.: B23C 5/10

(54) **Spanabhebendes Werkzeug**
Tool for chip-removal
Outil d'usinage par enlevement de copeaux

(30) Priorität: 09.06.2006 DE 102006026853
(43) Veröffentlichungstag der Anmeldung: 12.12.2007
(73) Patentinhaber: FRANKEN GmbH & Co. KG Fabrik für Präzisionswerkzeuge, 90607 Rückersdorf (DE)
(72) Erfinder: Glimpel, Helmut, 91207 Lauf (DE); Licha, Hans-Jörg, 90765 Fürth (DE)
(74) Vertreter: Schröer, Gernot H.

(56) Entgegenhaltungen:
- DE-A1- 10 325 600
- US-A1- 2006 045 638
- US-A1- 2006 067 797

## Beschreibung

Die Erfindung betrifft ein spanabhebendes Werkzeug gemäß dem Oberbegriff des Anspruchs 1, insbesondere ein Fräswerkzeug in Form eines Schaftfräsers. Ein solches Werkzeug ist aus Dokument US 2006/0045 638 A1 bekannt.

Ein Schaftfräser weist in der Regel einen langgestreckten zylindrischen Schaft als Grundteil und ein sich an das Grundteil anschließendes Kopfteil mit einer Umfangsseite und einer Stirnseite auf. Grund- und Kopfteil sind in der Regel einstückig ausgebildet und weisen eine gemeinsame Mittelachse auf. Das Kopfteil umfasst zumeist mehrere Schneiden, von denen jede eine Schnittkante an der Umfangsseite als auch eine Schnittkante an der Stirnseite aufweisen kann.

Je nach Einsatzbereich eines Schaftfräsers, insbesondere im Hinblick auf das Zerspanvolumen pro Zeiteinheit, welches mit einem solchen Schaftfräser erzielt werden soll, ist dieser unterschiedlich ausgebildet. Schaftfräser mit hohem Zerspanvolumen pro Zeiteinheit sind beispielsweise in der Luftfahrtindustrie bei der Herstellung von Teilen von Luftfahrzeugen erforderlich, da aus Sicherheitsgründen Bauteile für Luftfahrzeuge aus einem massiven Materialblock einstückig gefräst werden müssen. Um die Zeit für die Herstellung derartiger Bauteile in Grenzen zu halten, sind für in diesem Bereich eingesetzte Schaftfräser Zerspanvolumen von 4 l/min. und mehr gefordert. Diese Schaftfräser sind dabei starken Belastungen ausgesetzt, weshalb insbesondere die Hersteller derartiger Schaftfräser stets bemüht sind, die Schnitteigenschaften der Schaftfräser zu verbessern.

Eine MögLichkeit, die auf ein Werkzeug wirkenden Belastungen beim Zerspanen zu reduzieren, besteht beispielsweise darin, das Spanflussverhalten von Werkzeugflächen zu beeinflussen.

Aus der DE 197 24 319 C1 ist beispielsweise ein Verfahren bekannt, bei dem im Bereich von Schneidkanten bei spanerzeugenden Werkzeugen mit geometrisch bestimmter Schneide mit Hilfe einer Laserbestrahlung die Spanflächen im geringen Abstand zur Schneidkante mit einem die Oberflächenstruktur verändernden Muster versehen werden. Mit dieser Maßnahme kann die Fließgeschwindigkeit sowie die Richtung der abfließenden Späne beeinflusst werden.

Die US 2006/0045638A1 offenbart einen Schaftfräser mit helikal angeordneten Frässchneiden, wobei die Spanfläche an der Frässchneide drei konkav gekrümmte Abschnitte umfasst, zwischen denen Abhebespitzen für die Späne angeordnet sind.

Der Erfindung liegt die Aufgabe zugrunde, ein spanabhebendes Werkzeug der eingangs genannten Art derart auszuführen, dass mit dem Werkzeug ein möglichst hohes Zerspanvolumen pro Zeiteinheit erreichbar ist.

Nach der Erfindung wird diese Aufgabe gelöst durch ein spanabhebendes Werkzeug gemäβ dem Anspruch 1.

Erfindungsgemäß ist es bei dem spanabhebenden Werkzeug also vorgesehen, die Spanleitfläche in zwei Spanleitteilflächen mit unterschiedlichen Spanwinkeln zu unterteilen. Dadurch, dass der zweite Spanwinkel der zweiten Spanleitteilfläche im Vergleich zu dem ersten Spanwinkel der ersten Spanleitteilfläche größer gewählt ist, erreicht man, dass beim Zerspanvorgang zuerst nur die erste Spanleitteilfläche mit Spänen in Berührung kommt. Insbesondere wenn die erste Spanleitteilfläche dabei eine Wölbung aufweist, dient die erste Spanleitteilfläche quasi als eine Art "Sprungschanze" für die Späne, so dass die Späne erst nach einer Flugphase im Spanraum auf die zweite Spanleitteilfläche gelangen. Dadurch verringert sich der Schnittdruck, da eine geringere Umformenergie für die Späne erforderlich ist. In Folge des verringerten Schnittdrucks, kann man mit dem spanabhebenden Werkzeug ein höheres Zerspanvolumen pro Zeiteinheit erreichen, wodurch der Einsatz eines solchen spanabhebenden Werkzeuges wirtschaftlicher wird.

Nach einer Ausführungsform der Erfindung weist die Schneide nicht nur eine Schnittkante an der Umfangsseite, sondern auch eine Schnittkante an der Stirnseite des Kopfteils auf, wobei die Schnittkante der Umfangsseite der Schneide in die Schnittkante der Stirnseite der Schneide übergeht. Auf diese Weise kann mit dem spanabhebenden Werkzeug nicht nur umfangsseitig, sondern auch stirnseitig zerspant werden.

Nach einer Ausführungsform der Erfindung grenzt die Schnittkante der Stirnseite dabei an die zweite Spanleitteilfläche an. Demnach ist die erste Spanleitteilfläche im Wesentlichen nur der Schnittkante der Umfangsseite zugeordnet, während der Schnittkante der Stirnseite nur eine Spanleitfläche, nämlich die zweite Spanleitteilfläche zugeordnet ist.

Varianten der Erfindung sehen vor, dass der erste Spanwinkel zwischen 5 ° und 20 ° und vorzugsweise 17° beträgt und der zweite Spanwinkel vorzugsweise 24° beträgt.

Nach einer Ausführungsform der Erfindung weist die erste Spanleitteilfläche die in Folge ihrer Wirkung als "Sprungschanze" als Spanleitstufe bezeichnet wird, radial in Richtung auf die Mittelachse gesehen eine Breite zwischen 0,2 und 1,5 mm auf. Auch die zweite Spanleitteilfläche kann zur besseren Führung der Späne gewölbt sein.

Weitere Varianten der Erfindung sehen vor, dass die Schneide auf der Umfangsseite drei Freiflächen umfasst, von denen jede einen Freiwinkel zu einer Schnittebene der Umfangsseite aufweist. Der erste Freiwinkel der ersten Freifläche beträgt zwischen 0,8° und 1,2°, vorzugsweise 1°, der zweiten Freiwinkel der zweiten Freifläche beträgt zwischen 10° und 18°, vorzugsweise 12° und der dritte Freiwinkel der dritten Freifläche beträgt zwischen 20° und 25°, vorzugsweise 23°. Durch diese Ausgestaltung mit drei Freiflächen auf der Umfangsseite ergibt sich insgesamt beim Zerspanvorgang eine geringere Reibung zwischen dem spanabhebenden Werkzeug und dem Werkstück mit dämpfender Wirkung, so dass der Lauf des spanabhebenden Werkzeuges, welches vorzugsweise um die Mittelachse gedreht wird, ruhiger ist und somit die beim Zerspanen erzeugten Oberflächen von besserer Qualität sind.

Nach einer Ausführungsform der Erfindung ist die Breite der ersten Freifläche auf der Umfangsseite in Umfangsrichtung abhängig von dem Gesamtdurchmesser des wenigstens teilweise, im Wesentlichen zylinderförmig ausgeführten Werkzeugs, wobei die Breite der ersten Freifläche mit zunehmendem Durchmesser des Werkzeugs ebenfalls zunimmt. Nach einer bevorzugten Ausführungsform des Werkzeugs weist dieses einen Durchmesser zwischen 6 mm und 30 mm auf, wobei die Breite der Freifläche dabei zwischen 0,03 mm und 0,16 mm variieren kann. Verschiedenen Durchmessern des Werkzeugs sind dabei jeweils Parameterbereiche für die wählbare Breite der ersten Freifläche tabellarisch zugeordnet.

Die drei Freiflächen der Schneide auf der Umfangsseite sind im Übrigen im Wesentlichen eben ausgeführt, können jedoch auch leicht konkav gekrümmt sein.

Eine weitere Ausgestaltung des spanabhebenden Werkzeugs sieht vor, dass die Schneide auf der Stirnseite zwei Stirnfreiflächen aufweist, von denen jede einen Stirnfreiwinkel mit einer Schnittebene der Stirnseite einschließt. Der erste Stirnfreiwinkel der ersten Stirnfreifläche beträgt zwischen 7° und 15°, vorzugsweise 12° und der zweite Stirnfreiwinkel der zweiten Stirnfreifläche beträgt zwischen 15° und 30°, vorzugsweise 23°.

Die Schnittkante der Umfangsseite der Schneide des spanabhebenden Werkzeugs geht im Übrigen in einem Radius in die Schnittkante der Stirnseite der Schneide über. Der Radius beträgt dabei im Allgemeinen zwischen 1,5 mm und 5 mm, vorzugsweise 4 mm. Der Radius wird jedoch in der Regel an den Gesamtdurchmesser des Werkzeugs angepasst.

Nach einer Ausführungsform der Erfindung geht nicht nur die Schnittkante der Umfangsseite der Schneide in dem Radius in die Schnittkante der Stirnseite über, sondern auch die Freiflächen der Umfangsseite gehen in die Freiflächen der Stirnseite über. Während die zweite Freifläche der Umfangsseite in die erste Stirnfreifläche und die dritte Freifläche der Umfangsseite in die zweite Stirnfreifläche übergeht, läuft die erste Freifläche der Umfangsseite der Schneide in dem Radius, vorzugsweise nach im Wesentlichen zwei Dritteln des Radius aus.

Gemäß einer Variante der Erfindung weist das spanabhebende Werkzeug mehrere im Wesentlichen gleich ausgebildete Schneiden, vorzugsweise jedoch vier, fünf oder sechs Schneiden auf, welche um die Mittelachse angeordnet sind. Die Schnittkanten auf der Umfangsseite der Schneiden liegen dabei im Wesentlichen auf einer Mantelfläche eines Zylinders.

Nach einer bevorzugten Ausführungsform der Erfindung sind die Schneiden in Bezug auf die Mittelachse unter wenigstens zwei verschiedenen Teilungswinkeln relativ zueinander angeordnet. Die Schneiden sind demnach nicht gleichförmig um die Mittelachse angeordnet. Die Teilungswinkel zwischen aufeinander folgenden Schneiden betragen zwischen 60° und 120°. Ausführungsformen des spanabhebenden Werkzeuges sehen vor, dass dieses vier Schneiden aufweist, wobei der Teilungswinkel zwischen der ersten und zweiten Schneide und der dritten und vierten Schneide jeweils 80° und der Teilungswinkel zwischen der zweiten und dritten Schneide und der vierten und ersten Schneide jeweils 100° beträgt. Der Teilungswinkel zwischen der ersten und zweiten Schneide und der dritten und vierten Schneide kann jedoch auch jeweils 60° und der Teilungswinkel zwischen der zweiten und dritten Schneide und der vierten und ersten Schneide jeweils 120° betragen.

Die Schnittkante der Umfangsseite einer Schneide verläuft nach einer Ausführungsform der Erfindung schraubenlinienförmig, wobei der Drallwinkel einer Schneide konstant sein kann und insbesondere zwischen 20° und 50°, vorzugsweise 30°, beträgt. Der Drall muss jedoch nicht notwendigerweise konstant sein, sondern kann sich axial in Richtung der Mittelachse M auf die Stirnseite zu erhöhen. Der Drallwinkel kann sich also im Bezug auf die Mittelachse auf die Stirnseite zu vergrößern, insbesondere von einem Drallwinkel von 0° bis 25° an einem von der Stirnseite entfernten Bereich der Schneide bis auf einen Drallwinkel zwischen 30° und 50° an der Stirnseite.

Einer jeden Schneide des spanabhebenden Werkzeugs ist ein Spanraum zum Abführen von Spänen zugeordnet, wobei sich nach einer Ausführungsform der Erfindung das Volumen des Spanraums axial in Richtung der Mittelachse auf das Grundteil zu verkleinert. Nach einer Variante der Erfindung ist der Spanraum im Wesentlichen konisch ausgebildet, wobei der Konus im Bezug auf die Mittelachse einen Winkel zwischen größer 0° und 10°, vorzugsweise zwischen 5° und 6° aufweist. Verläuft die Schnittkante der Umfangsseite einer Schneide schraubenlinienförmig, so verläuft auch der konisch ausgebildete Spanraum entsprechend schraubenlinienförmig, wobei sich, wie bereits erwähnt, in Folge der konischen Ausgestaltung des Spanraums, das Volumen des Spanraums axial in Richtung der Mittelachse auf das Grundteil zu verkleinert.

In einer bevorzugten Variante der Erfindung ist wenigstens einer oder jeder Schneide ein Spanraum zum Abführen von Spänen zugeordnet, wobei das Werkzeug zumindest in Teilbereichen der Oberfläche des wenigstens einen Spanraumes, die in Kontakt mit den abgeführten Spänen treten können, eine geringe Oberflächenrauigkeit aufweist, wobei die mittlere Oberflächenrauigkeit (das arithmetische Mittel) Ra zwischen 0,03 µm und 0,10 µm und/oder die gemittelte Rautiefe (Zehnpunkthöhe) Rz zwischen 0,10 und 0,35 µm und/oder die maximale Rautiefe Rmax zwischen 0,20 und 0,50 µm gewählt ist. Diese geringe Oerflächenrauigkeit oder glattere Oberfläche wird vorzugsweise dadurch erzeugt, dass die Oberfläche oder die entsprechenden Teilbereiche der Oberfläche im Spanraum mit der geringen Oberflächenrauigkeit durch Schleifen oder Polieren oder Nachschleifen oder Nachpolieren mit einem entsprechend feinen Schleifwerkzeug erzeugt ist bzw. sind. Es werden also nur die entsprechenden Oberflächen in den Spanräumen oder Spannuten nachbearbeitet zur zusätzlichen Glättung, die übrigen Bereiche des Werkzeuges wie insbesondere die Schneiden dagegen nicht. Die glatteren oder nachbearbeiteten Oberflächenbereiche im Spanraum liegen bevorzugt in einem der Spanfläche gegenüberliegenden Oberflächenbereich im Spanraum oder, mit anderen Worten, an einem Rücken einer Schneide, der dem Spanraum einer benachbarten Schneide zugewandt ist.

Die Schnittkante wenigstens einer Schneide, vorzugsweise jeder Schneide, ist wenigstens teilweise gewellt oder wellenförmig oder weist eine Schruppverzahnung auf. In dieser Ausführungsform, die zum Schruppen vorgesehen ist, dient die Ausbildung der Spanleitfläche mit den zwei Spanleitteilflächen auch zusätzlich zur Stabilisierung der Schruppverzahnung oder gewellten Schneide.

Nach einer Ausgestaltung der Erfindung liegen jeweils zwei jeweils eine Schnittkante einer Schneide aufweisende Schnittbereiche auf der Stirnseite auf einer Geraden, wobei zwei auf einer ersten Gerade liegende Schnittbereiche ineinander übergehen und zwei auf einer die erste Gerade schneidenden zweiten Gerade liegende Schnittbereiche im Bereich der Mittelachse jeweils eine radial nach außen in Richtung der ersten Gerade verlaufende Ausnehmung aufweisen, die jeweils in einen Spanraum übergeht. Eine derartige Ausnehmung weist zwei im Wesentlichen V-förmige Teilbereiche auf. Bei einem Werkzeug mit vier Schneiden sind demnach zwei derartige Ausnehmungen mit jeweils zwei im Wesentlichen V-förmigen Teilbereichen vorhanden.

Nach einer Variante der Erfindung weist das Werkzeug wenigstens einen Kanal für die Zuführung von Kühlmittel zu den Schneiden auf, wobei der Kanal seine Mündung im Bereich einer Ausnehmung und einer zweiten Stirnfreifläche einer Schneide hat, deren Schnittbereich auf der Stirnseite nicht in einen anderen Schnittbereich übergeht. Vorzugsweise weist das Werkzeug mit vier Schneiden zwei Kanäle auf, deren Mündungen sich 180° gegenüber liegen. Diese Anordnung der Mündungen der Kühlkanäle erlaubt es, über die Ausnehmungen die Schneiden gut mit Kühlmittel zu beaufschlagen. Zudem wird eine gute Abfuhr von anfallenden Spänen bewirkt.

Nach einer Variante der Erfindung handelt es sich bei dem spanabhebenden Werkzeug bevorzugt um einen Torusfräser.

Ein Ausführungsbeispiel der Erfindung ist in den beigefügten schematischen Zeichnungen dargestellt. Es zeigen:
- FIG 1: in einer perspektivischen Darstellung einen Schaftfräser,
- FIG 2: einen Querschnitt durch den Schaftfräser aus FIG 1,

- FIG 3: in vergrößerter Darstellung eine Schneide gemäß der Darstellung nach FIG 2,
- FIG 4: eine perspektivische Ansicht des Kopfteils des Schaftfräsers auf FIG 1 und
- FIG 5: eine Draufsicht auf die Stirnseite des Schaftfräsers aus FIG 1

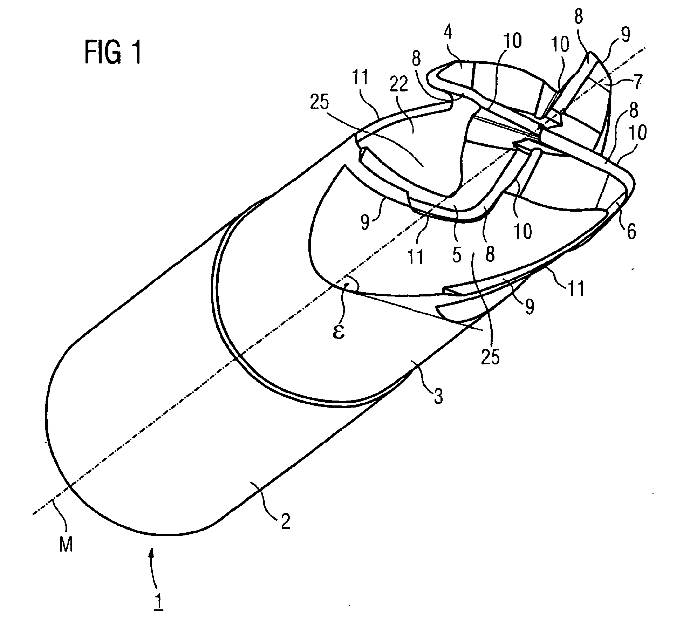

In FIG 1 ist ein spanabhebendes Werkzeug in Form eines Schaftsfräsers, im vorliegenden Fall in Form eines Torusfräser 1 dargestellt. Der Torusfräser 1 umfasst ein Grundteil 2, welches den Schaft des Torusfräsers 1 darstellt. An den Schaft 2 schließt sich ein Kopfteil 3 des Torusfräsers 1 an, welches Kopfteil 3 die Schneiden des Torusfräsers aufweist.

Der Torusfräser 1 ist vorliegend wenigstens teilweise im Wesentlichen zylinderförmig ausgebildet und weist eine Mittelachse M auf, um die der Torusfräser 1 drehbar ist. Im Falle des vorliegenden Ausführungsbeispieles weist der Torusfräser 1 vier Schneiden 4 bis 7 auf, welche um die Mittelachse M angeordnet sind. Jede der Schneiden 4 bis 7 umfasst einen Schnittbereich 8 auf der Stirnseite und einen Schnittbereich 9 auf der Umfangsseite. Jede der Schneiden 4 bis 7 weist in ihrem Schnittbereich 8 auf der Stirnseite eine Schnittkante 10 und in ihrem Schnittbereich 9 auf der Umfangsseite eine Schnittkante 11 auf. Die Schnittbereiche 9 auf der Umfangsseite, insbesondere die Schnittkanten 11 der Umfangsseite der Schneiden 4 bis 7 verlaufen im Falle des vorliegenden Ausführungsbeispieles schraubenlinienförmig, wobei sich die Schnittkanten 11 im Wesentlichen auf der Mantelfläche des zylinderförmigen Torusfräsers 1 befinden. Der Drallwinkel ε einer jeden Schneide 4 bis 7, welcher in Bezug auf die Mittelachse M angegeben wird, was in FIG 1 veranschaulicht ist, beträgt im Falle des vorliegenden Ausführungsbeispieles 30°. Der Drallwinkel kann jedoch je nach Dimensionierung des Torusfräsers zwischen 20° und 50° liegen. Vorzugsweise ändert sich der Drall einer Schneide 4 bis 7, wie im Fall des vorliegenden Ausführungsbeispieles, nicht. Der Drall kann jedoch auch axial in Richtung der Mittelachse M auf die Stirnseite des Torusfräsers 1 zu erhöht werden.

Im Falle des vorliegenden Ausführungsbeispiels sind die um die Mittelachse M angeordneten Schneiden 4 bis 7 nicht gleichförmig, d. h. jeweils mit gleichem Abstandswinkel in Bezug auf die Mittelachse M um die Mittelachse M angeordnet.

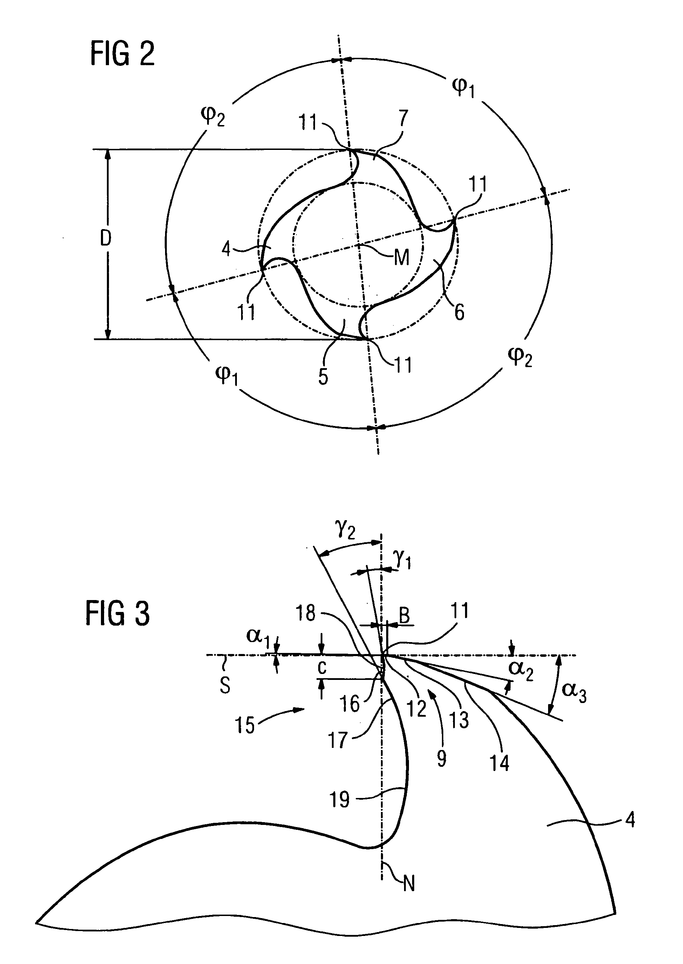

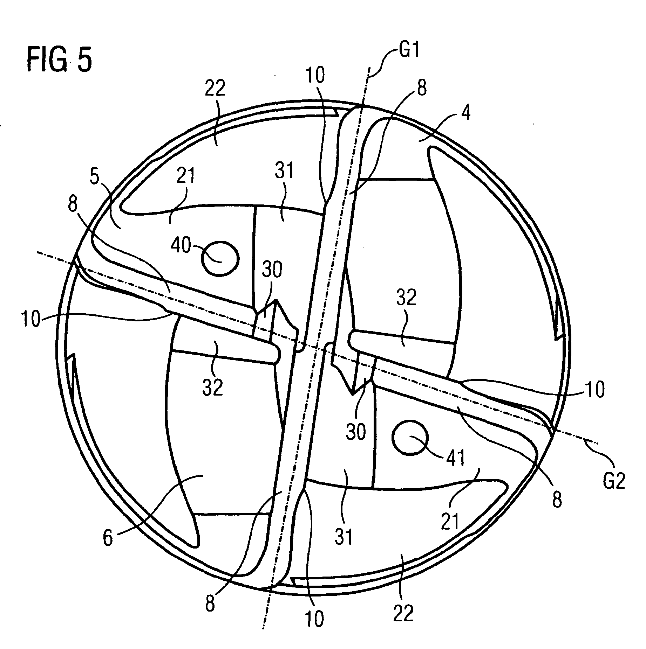

Wie insbesondere der FIG 2 entnommen werden kann, die in vereinfachter Weise einen Querschnitt durch das Kopfteil 3 des Torusfräsers 1 im Bereich der Schneiden 4 bis 7 zeigt, variiert der Winkel zwischen den Schneiden 4 bis 7, wobei jeweils auf die Lage der Schnittkante, im Falle der FIG 2 auf die Lage der Schnittkante 11 der Umfangsseite einer Schneide 4 bis 7 Bezug genommen wird. Während der so genannte Teilungswinkel zwischen der Schnittkante 11 der Umfangsseite der Schneide 4 und der Schnittkante 11 der Umfangsseite der Schneide 5 sowie der Schnittkante 11 der Umfangsseite der Schneide 6 und der Schnittkante 11 der Umfangsseite der Schneide 7 jeweils ϕ₁ beträgt, schließen die Schnittkante 11 der Umfangsseite der Schneide 5 und die Schnittkante 11 der Umfangsseite der Schneide 6 sowie die Schnittkante 11 der Umfangsseite der Schneide 7 und Schnittkante 11 der Umfangsseite der Schneide 4 jeweils einen Teilungswinkel ϕ₂ ein. Im Falle des vorliegenden Ausführungsbeispiels betragen der Teilungswinkel ϕ₁ 80° und der Teilungswinkel ϕ₂ 100 °. Die Teilungswinkel ϕ₁ und ϕ₂ können aber auch andere Werte einnehmen. Beispielsweise kann der Teilungswinkel ϕ₁ 60° und der Teilungswinkel ϕ₂ 120° betragen. Erwähnenswert ist, dass die Winkle ϕ₁ und ϕ₂ verhältnismäßig weit auseinanderliegen. Vorzugsweise beträgt der Teilungswinkel zwischen zwei aufeinander folgenden Schneiden zwischen 60° und 120°. Die Angabe der Teilungswinkel gilt im Falle des vorliegenden Ausführungsbeispiels im Übrigen auch für die entsprechenden zu den Schnittkanten 11 der Umfangsseite gehörigen Schnittkanten 10 der Stirnseite der jeweiligen Schneide, was der FIG 5 zu entnehmen ist.

Anhand von FIG 3, welche in einer vergrößerten Darstellung eine Schneide aus FIG 2 zeigt, sollen insbesondere die geometrischen Verhältnisse einer Schneide in Umfangsrichtung erläutert werden. Im Falle des vorliegenden Ausführungsbeispiels ist in FIG 3 exemplarisch für alle Schneiden des Torusfräsers 1 die Schneide 4 auf ihrer Umfangsseite vergrößert dargestellt. Im Schnittbereich 9 auf der Umfangsseite weist die Schneide 4 die Schnittkante 11 der Umfangsseite auf. Der Schnittkante 11 unmittelbar benachbart ist eine erste Freifläche 12, die unter einem ersten Freiwinkel zu der mit S bezeichneten Schnittebene angeordnet ist. Bei der Schnittebene S handelt es sich um die Tangentialebene an die Schnittkante 11 in Schnittrichtung. Der erste Feiwinkel α₁ der ersten Freifläche 12 beträgt zwischen 0,8° und 1,2°, vorzugsweise 1°. An die erste Freifläche 12 schließt sich eine zweite Freifläche 13 an, welche unter einem zweiten, gegen die Schnittebene S gemessenen Freiwinkel α₂ angeordnet ist. Der zweite Freiwinkel α₂ der zweiten Freifläche 13 beträgt zwischen 10° und 18°, vorzugsweise 12°. An die zweite Freifläche 13 schließt sich schließlich eine dritte Freifläche 14 an, die unter einem dritten Freiwinkel α₃ steht, der ebenfalls gegen die Schnittebene S gemessen wird. Der dritte Freiwinkel α₃ der dritten Freifläche 14 beträgt zwischen 20° und 25°, vorzugsweise 23°. Die Breite B in Umfangsrichtung der ersten Freifläche 12, welche auch als Stützphase bezeichnet wird, steht in Abhängigkeit vom Durchmesser D des zylinderförmigen Torusfräsers 1. Mit zunehmenden Durchmesser D des Torusfräsers 1 nimmt auch die Breite B der ersten Freifläche 12 zu. Vorzugsweise wird der Torusfräser mit Durchmessern D zwischen 6 mm und 30 mm ausgeführt, wobei die Breite B in Umfangsrichtung der ersten Freifläche 12 in diesem Fall zwischen 0,03 mm und 0,16 mm variieren kann. Die drei Freiflächen 12 bis 14 sind im Falle des vorliegenden Ausführungsbeispiels als ebene Freiflächen dargestellt. Die drei Freiflächen müssen jedoch nicht notwendigerweise eben sein, sondern können auch leicht gekrümmt, insbesondere können die drei Freiflächen leicht konkav gekrümmt ausgeführt sein.

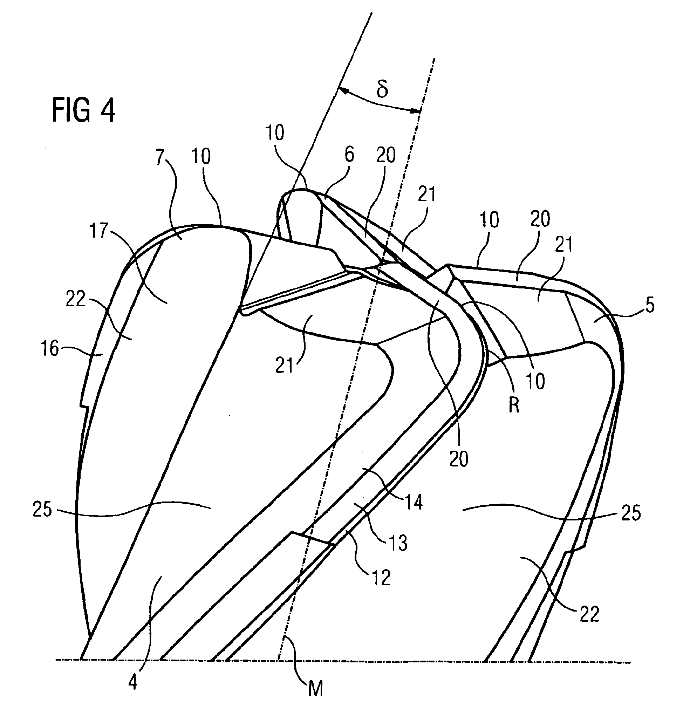

In FIG 4, welche eine perspektivische Ansicht der Schneiden 4 bis 7 des Kopfteils 3 des Torusfräsers 1 zeigt, sind die drei Freiflächen 12 bis 14 der Schneide 4 exemplarisch für alle Schneiden 4 bis 7 nochmals dargestellt. Wie der FIG 3 weiterhin entnommen werden kann, weist der Schnittbereich 9 in Umfangsrichtung der Schneide 4 eine Spanleitfläche 15 auf, welche zwei Spanleitteilflächen 16 und 17 umfasst. Die erste Spanleitteilfläche 16 ist in Bezug auf eine durch die Schnittkante 11 verlaufende Normalenebene N zu der Schnittebene S unter einem ersten Spanwinkel γ₁ und die zweite Spanleitfläche 17 unter einem zweiten Spanwinkel γ₂ in Bezug auf die Normalenebene N angeordnet. Der erste Spanwinkel γ₁, der in Bezug auf den der Schnittkante 11 benachbarten Anfangsverlauf der ersten Spanleitteilfläche 16 angegeben wird, beträgt zwischen 5° und 20°, vorzugsweise 17°. Der zweite Spanwinkel γ₂, der in Bezug auf den der ersten Spanleitteilfläche 16 benachbarten Anfangsverlauf der zweiten Spanleitteilfläche 17 angegeben wird, beträgt zwischen 10° und 30°, vorzugsweise 24°. Je nach Ausführungsform des Torusfräsers 1 wird der zweite Spanwinkel γ₂ immer größer gewählt als der erste Spanwinkel γ₁, da sich, wie der FIG 3 entnehmen lässt, dadurch eine Art "Sprungschanze" für an der Spanleitteilfläche 16 entlanggleitende, beim Zerspanprozess entstehende Späne ergibt. Die erste Spanleitteilfläche 16 weist zur Verstärkung dieses Effektes eine Wölbung 18 auf. Im Falle des vorliegenden Ausführungsbeispiels weist im Übrigen auch die Spanleitteilfläche 17 eine Wölbung 19 auf. Durch die Ausführung insbesondere der Spanleitteilfläche 16, welche auch als Spanleitstufe bezeichnet wird, treten beim Zerspanprozess entstehende Späne in der Regel zunächst nur mit der ersten Spanleitteilfläche 16 in Berührung und werden insbesondere bedingt durch die Wölbung 18 und die Winkelwahl von γ₁ und γ₂ von der zweiten Spanleitteilfläche 17 zunächst ferngehalten. Dies schließt jedoch nicht aus, dass nachfolgend dennoch Späne, aber bereits nach ihrer Umformung mit der zweiten Spanleitteilfläche 17 in Berührung kommen. Vorteilhaft an dieser Ausführung ist, dass der Schnittdruck beim Zerspanvorgang vermindert wird, da weniger Energie für die Umformung der Späne benötigt wird.

Die Spanleitteilfläche 16 weist im Übrigen radial in Richtung auf die Mittelachse M eine Breite C zwischen 0,2 und 1,5 mm auf.

Wie insbesondere den FIG 1 und 4 entnommen werden kann, geht jeder Schnittbereich 9 einer Umfangsseite einer der Schneiden 4 bis 7 jeweils in den Schnittbereich 8 der Stirnseite der Schneide 4 bis 7 über. Insbesondere geht die Schnittkante 11 der Umfangsseite einer Schneide 4 bis 7 in die Schnittkante 10 der Stirnseite der Schneide 4 bis 7 über. Wie anhand von FIG 4, mit Bezugszeichen veranschaulicht, weist jede der Schneiden 4 bis 7 in ihrem Schnittbereich 8 auf der Stirnseite neben der Schnittkante 10 eine erste Stirnfreifläche 20 und eine zweite Stirnfreifläche 21 auf. Die erste Stirnfreifläche 20 schließt sich jeweils an die Schnittkante 10 der Stirnseite an und weist in Bezug auf eine stirnseitige, nicht explizit dargestellte Schnittebene einen ersten Stirnfreiwinkel β₁ zwischen 7° und 15°, vorzugsweise 12° ein.

Die zweite, sich an die erste Stirnfreifläche 20 anschließende Stirnfreifläche 21 schließt mit der nicht explizit dargestellten stirnseitigen Schnittebene einen zweiten Stirnfreiwinkel β₂ zwischen 15° und 30°, vorzugsweise 23° ein.

Wie bereits erwähnt, geht der Schnittbereich 9 der Umfangsseite in einen Schnittbereich 8 der Stirnseite, insbesondere in einem Radius R über. Speziell trifft dies auf die Schnittkante 11 der Umfangsseite und die Schnittkante 10 der Stirnseite zu. Der Radius R beträgt in der Regel zwischen 1,5 mm und 5 mm, vorzugsweise 4 mm. Wie insbesondere FIG 4 entnommen werden kann, läuft die erste Freifläche 12 auf der Umfangsseite einer jeden Schneide 4 bis 7 in dem Radius R, vorzugsweise nach im Wesentlichen zwei Dritteln des Radius R aus. Demnach geht die zweite Freifläche 13 der Umfangsseite im Wesentlichen in die erste Stirnfreifläche 20 der Stirnseite einer Schneide 4 bis 7 über. In entsprechender Weise geht die dritte Freifläche 14 der Umfangsseite in die zweite Stirnfreifläche 21 der Stirnseite über.

Wie ebenfalls der FIG 4 anhand der Schneide 7, exemplarisch für alle Schneiden 4 bis 7, entnommen werden kann, ist die erste Spanleitteilfläche 16 jeweils nur auf der Umfangsseite und nicht auf der Stirnseite einer jeden der Schneiden 4 bis 7 vorhanden. Die Schnittkante 10 auf der Stirnseite einer jeden Schneide 4 bis 7 grenzt nur unmittelbar an die zweite Spanleitteilfläche 17 an.

Jede der Schneiden 4 bis 7 weist darüber hinaus einen Spanraum 22 zur Abfuhr der beim Zerspanen erzeugten Späne auf. Das Volumen eines jeden Spanraumes 22 verkleinert sich dabei vorzugsweise axial in Richtung der Mittelachse M auf den Schaft 2 zu. Vorzugsweise ist jeder Spanraum 22 jeder der Schneiden 4 bis 7 im Wesentlichen konisch ausgebildet, wobei der Konus in Bezug auf die Mittelachse M einen Winkel δ zwischen größer 0° und 10°, vorzugsweise zwischen 5° und 6° aufweist, wodurch die Verkleinerung des Volumens des Spanraums 22 erreicht wird. Durch die Verkleinerung des Spanraums 22 wird der Aufbau des Torusfräsers 1 im Kopfbereich 3 speziell im Bereich seiner Schneiden 4 bis 7 in Richtung der Mittelachse M auf den Schaft 2 zu stabiler, so dass axiale Verbiegungen bei der Zerspanung reduziert werden können.

Die Oberfläche in jedem Spanraum 22 ist nun in einem in FIG 1 und 4 mit 25 bezeichneten Teilbereich, der der Spanleitfläche 15, 16, 17 und deren zugeordneter Schnittkante 11 gegenüber liegt oder diesen von der anderen Seite des Spanraumes 22 aus zugewandt ist, durch Nachpolieren oder Nachschleifen geglättet derart, dass dort eine geringere Oberflächenrauigkeit vorliegt als im übrigen Spanraum 22. Die mittlere Oberflächenrauigkeit (das arithmetische Mittel) Ra in diesen Teilbereichen 25 der Oberfläche in den Spanräumen 22 ist zwischen 0,03 µm und 0,10 µm und/oder die gemittelte Rautiefe (Zehnpunkthöhe) Rz zwischen 0,10 und 0,35 µm und/oder die maximale Rautiefe Rmax zwischen 0,20 und 0,50 µm eingestellt. Diese Maßnahme verbessert die Spanabfuhr in den Spanräumen 22 und reduziert die dabei auftretenden Reibungskräfte.

In FIG 5 ist in einer Draufsicht auf den Torusfräser 1 die stirnseitige Ausgestaltung des Torusfräsers 1 gezeigt. So ist aus FIG 5 zu erkennen, dass jeweils zwei jeweils eine stirnseitige Schnittkante 10 einer Schneide aufweisende Schnittbereiche 8 auf der Stirnseite auf einer Geraden G1 bzw. G2 liegen. Im Falle des vorliegenden Ausführungsbeispiels liegen die Schnittbereiche 8 der Stirnseite der Schneiden 4 und 6 auf der Geraden G1 und gehen ineinander über. Die Schnittbereiche 8 der Schneiden 5 und 7 liegen auf der Geraden G2, welche die Gerade G1 schneidet, wobei der Schnittbereich 8 auf der Stirnseite der Schneide 5 nicht in den Schnittbereich 8 auf der Stirnseite der Schneide 7 übergeht. Vielmehr weisen die Schnittbereiche 8 der Schneiden 5 und 7 in Richtung der Geraden G 1 verlaufende gleichförmige Ausnehmungen auf, wobei jede Ausnehmung zwei im Wesentlichen V-förmige Teilbereiche 30 und 31 umfasst. Die Teilbereiche 30, 31 der Ausnehmung gehen dabei jeweils in einen Spanraum 22 über. Vom Teilbereich 30 zweigt jeweils in Richtung der Geraden G2 bei den Schneiden 4 und 6 ein ebenfalls V-förmiger Bereich 32 ab, welche ebenfalls jeweils in einen Spanraum 22 münden.

Wie aus Gründen der Übersichtlichkeit nur der FIG 5 entnommen werden kann, weist der Torusfräser 1 zwei Kanäle 40 und 41 für die Zuführung von Kühlmittel zu den Schneiden 4 bis 7 auf, wobei der Kanal 40 seine Mündung im Bereich des Teilbereichs 31 und der zweiten Stirnfreifläche 21 der Schneide 5 und der Kanal 41 seine Mündung im Teilbereich 31 der Ausnehmung der Schneide 7 und der zweiten Stirnfreifläche 21 der Schneide 7 hat. Durch die Ausnehmungen 30 bis 32 kann das Kühlmittel zur Kühlung der Schneiden 4 bis 7 beim Zerspanprozess jeweils zu den Schneiden 4 bis 7 gelangen und zudem für einen Abtransport der beim Zerspanvorgang anfallenden Späne sorgen. Die Mündungen der Kanäle 40 und 41 liegen im Übrigen 180 ° gegenüber. Die Führung der Kanäle 40, 41 durch den Torusfräser 1 ist nicht explizit gezeigt, erfolgt aber speziell im Kopfbereich 3 in Anpassung an die schraubenlinienförmige Führung der Schneiden 4 bis 7 vorzugsweise entsprechend schraubenlinienförmig.

Die Erfindung wurde vorstehend am Beispiel eines Torusfräsers beschrieben. Die Erfindung ist jedoch nicht auf einen Torusfräser oder ein anderes Fräswerkzeug beschränkt. Vielmehr können auch andere spanabhebende Werkzeuge erfindungsgemäß ausgebildet sein.

Das spanabhebende Werkzeug ist vorliegend mit vier Schneiden beschrieben, was jedoch nicht zwingend erforderlich ist. So kann das Werkzeug auch mit fünf, sechs oder mehr Schneiden ausgeführt werden. Die Schneiden müssen dabei nicht notwendigerweise auch stirnseitig Schnittkanten aufweisen. Vielmehr können nur an der Umfangsseite Schnittkanten vorgesehen sein.

### Bezugszeichenliste

- 1: Torus fräser
- 2: Schaft
- 3: Kopfteil
- 4 bis 7: Schneiden
- 8: stirnseitiger Schnittbereich
- 9: umfangsseitiger Schnittbereich
- 10: Schnittkante der Stirnseite
- 11: Schnittkante der Umfangsseite
- 12: erste Freifläche (Stützphase)
- 13: zweite Freifläche
- 14: dritte Freifläche
- 15: Spanleitfläche
- 16: erste Spanleitteilfläche (Spanleitstufe)
- 17: zweite Spanleitteilfläche
- 18: Wölbung
- 19: Wölbung
- 20: erste Stirnfreifläche
- 21: zweite Stirnfreifläche
- 22: Spanraum
- 25: Teilbereich
- 30: Teilbereich der Ausnehmung
- 31: Teilbereich der Ausnehmung
- 32: Ausnehmung
- 40, 41: Kühlmittelkanal

- M: Mittelachse
- ε: Drallwinkel
- D: Werkzeugdurchmesser
- α₁: erster Freiwinkel
- α₂: zweiter Freiwinkel
- α₃: dritter Freiwinkel
- β₁: erster Stirnfreiwinkel
- β₂: zweiter Stirnfreiwinkel
- γ₁: erster Spanwinkel
- γ₂: zweiter Spanwinkel
- ϕ₁: erster Teilungswinkel
- ϕ₂: zweiter Teilungswinkel
- δ: Konuswinkel
- S: Schnittebene
- N: Normalenebene
- B: Breite der ersten Freifläche
- C: Breite der ersten Spanleitteilfläche
- R: Radius
- G1: erste Gerade
- G2: zweite Gerade

## Patentansprüche

1. Spanabhebendes Werkzeug (1), insbesondere Fräswerkzeug, mit
a) einem Grundteil (2) und
b) einem sich an das Grundteil (2) anschließenden Kopfteil (3) mit einer Umfangsseite und einer Stirnseite,
c) welches Grundteil (2) und Kopfteil (3) eine gemeinsame Mittelachse (M) aufweisen,
d) welches Kopfteil (3) wenigstens eine Schneide (4 bis 7) mit einer Schnittkante (11) an der Umfangsseite aufweist,
e) wobei die Schneide (4 bis 7) eine an die Schnittkante (11) der Umfangsseite angrenzende Spanleitfläche (15) aufweist,
f) die Spanleitfläche (15) zwei Spanleitteilflächen (16, 17) umfasst,
g) wobei die erste Spanleitteilfläche (16) unter einem ersten Spanwinkel (γ₁) und die zweite Spanleitteilfläche (17) unter einem zweiten Spanwinkel (γ₂) angeordnet ist,
**dadurch gekennzeichnet, dass**
h) wobei die erste Spanleitteilfläche (16) eine Wölbung (18) aufweist,
i) wobei der zweite Spanwinkel (γ₂) in Bezug auf den ersten Spanwinkel (γ₁) größer ist,
j) wobei der erste Spanwinkel (γ₁) aus einem Bereich zwischen 0° und 20° gewählt ist und der zweite Spanwinkel (γ₂) zwischen 10° und 30° beträgt

2. Werkzeug nach Anspruch 1, bei dem die Schneide (4 bis 7) eine Schnittkante (10) an der Stirnseite aufweist, wobei vorzugsweise die Schnittkante (11) der Umfangsseite der Schneide (4 bis 7) in die Schnittkante (10) der Stirnseite der Schneide (4 bis 7) übergeht und/oder wobei vorzugsweise die Schnittkante (10) der Stirnseite an die zweite Spanleitteilfläche (17) angrenzt.

3. Werkzeug nach Anspruch 1 oder Anspruch 2, bei dem der erste Spanwinkel (γ₁) aus einem Bereich zwischen 5 ° und 20 ° und vorzugsweise etwa 17° gewählt ist.

4. Werkzeug nach einem der Ansprüche 1 bis 3, bei dem der zweite Spanwinkel (γ₂) 24° beträgt.

5. Werkzeug nach einem der Ansprüche 1 bis 4, bei dem die erste Spanleitteilfläche (16) radial in Richtung auf die Mittelachse M eine Breite C zwischen 0,2 und 1, 5 mm aufweist.

6. Werkzeug nach einem der Ansprüche 1 bis 5, bei dem die zweite Spanleitteilfläche (17) eine Wölbung (19) aufweist.

7. Werkzeug nach einem der Ansprüche 1 bis 6, bei dem die Schneide (4 bis 7) auf der Umfangsseite drei Freiflächen (12, 13, 14) umfasst, von denen jede einen Freiwinkel (α₁, α₂, α₃) zu einer Schnittebene S der Umfangsseite aufweist,
wobei vorzugsweise der erste Freiwinkel (α₁) der ersten Freifläche (12) zwischen 0,8° und 1,2°, vorzugsweise 1° beträgt und/oder
wobei vorzugsweise der zweite Freiwinkel (α₂) der zweiten Freifläche (13) zwischen 10° und 18°, vorzugsweise 12° beträgt und/oder
wobei vorzugsweise der dritte Freiwinkel (α₃) der dritten Freifläche (13) zwischen 20° und 25°, vorzugsweise 23° beträgt und/oder
wobei vorzugsweise die Breite B der ersten Freifläche (12) in Umfangsrichtung abhängig von dem Durchmesser D des Werkzeugs (1) ist und mit zunehmendem Durchmesser D des Werkzeug (1) zunimmt, wobei vorzugsweise der Durchmesser D des Werkzeugs (1) zwischen 6 mm und 30 mm und die Breite B der ersten Freifläche (12) zwischen 0,03 mm und 0,16 mm beträgt
und/oder
wobei vorzugsweise die drei Freiflächen (12, 13, 14) im Wesentlichen eben oder leicht konkav gekrümmt ausgeführt sind.

8. Werkzeug nach einem der Ansprüche 1 bis 7, bei dem die Schneide (4 bis 7) auf der Stirnseite zwei Stirnfreiflächen (20, 21) aufweist, von denen jede einen Stirnfreiwinkel (β₁, β₂) zu einer Schnittebene der Stirnseite aufweist, wobei vorzugsweise der erste Stirnfreiwinkel (β₁) der ersten Stirnfreifläche (20) zwischen 7° und 15°, vorzugsweise 12° beträgt und/oder der zweite Stirnfreiwinkel (β₂) der zweiten Stirnfreifläche (21) zwischen 15° und 30°, vorzugsweise 23° beträgt.

9. Werkzeug nach Anspruch 2 oder einem der auf Anspruch 2 rückbezogenen Ansprüche, bei dem die Schnittkante (11) der Umfangsseite der Schneide (4 bis 7) in einem Radius R in die Schnittkante (10) der Stirnseite der Schneide (4 bis 7) übergeht, wobei vorzugsweise der Radius R zwischen 1,5 mm und 5 mm, vorzugsweise 4 mm, beträgt, und/oder wobei vorzugsweise die erste Freifläche (12) auf der Umfangsseite der Schneide (4 bis 7) in dem Radius R, vorzugsweise nach im Wesentlichen zwei Dritteln des Radius R ausläuft.

10. Werkzeug nach einem der Ansprüche 1 bis 9, welches mehrere im Wesentlichen gleich ausgebildete Schneiden (4 bis 7), vorzugsweise vier, fünf oder sechs Schneiden aufweist, welche um die Mittelachse (M) angeordnet sind.

11. Werkzeug nach einem der Ansprüche 1 bis 10, bei dem die Schnittkante (11) auf der Umfangsseite der Schneide (4 bis 7) im Wesentlichen auf einer Mantelfläche eines Zylinders liegt.

12. Werkzeug nach einem der vorhergehenden Ansprüche, bei dem mehrere Schneiden (4 bis 7) vorgesehen sind, die in Bezug auf die Mittelachse (M) unter wenigstens zwei verschiedenen Teilungswinkeln (ϕ₁, ϕ₂) relativ zueinander angeordnet sind, wobei vorzugsweise der Teilungswinkel (ϕ₁, ϕ₂) zwischen zwei aufeinander folgenden Schneiden (4 bis 7) zwischen 60° und 120° beträgt,
wobei das Werkzeug insbesondere vier Schneiden (4 bis 7) aufweist, wobei vorzugsweise der Teilungswinkel (ϕ₁) zwischen der ersten und zweiten Schneide (4, 5) und der dritten und vierten Schneide (6, 7) jeweils 80° und vorzugsweise der Teilungswinkel (ϕ₂) zwischen der zweiten und dritten Schneide (5, 6) und der vierten und ersten Schneide (7, 4) jeweils 100° beträgt oder wobei der Teilungswinkel (ϕ₁) zwischen der ersten und zweiten Schneide und der dritten und vierten Schneide jeweils 60° und der Teilungswinkel (ϕ₂) zwischen der zweiten und dritten Schneide und der vierten und ersten Schneide jeweils 120° beträgt.

13. Werkzeug nach einem der Ansprüche 1 bis 12, bei dem die Schnittkante (11) der Umfangsseite einer Schneide (4 bis 7) schraubenlinienförmig verläuft.

14. Werkzeug nach Anspruch 13, bei dem sich der Drallwinkel (ε) einer Schneide (4 bis 7) zwischen 0° und 50°, vorzugsweise 30°, beträgt und/oder sich axial in Richtung der Mittelachse (M) auf die Stirnseite zu erhöht, insbesondere von einem Drallwinkel von 0° bis 25° an einem von der Stirnseite entfernten Bereich der Schneide bis auf einen Drallwinkel zwischen 30° und 45° an der Stirnseite.

15. Werkzeug nach einem der Ansprüche 1 bis 14, bei dem der Schneide (4 bis 7) ein Spanraum (22) zum Abführen von Spänen zugeordnet ist, wobei sich das Volumen des Spanraums (22) vorzugsweise axial in Richtung der Mittelachse (M) auf das Grundteil (2) zu verkleinert und/oder wobei der Spanraum (22) im Wesentlichen konisch ausgebildet ist, wobei der Konus in Bezug auf die Mittelachse (M) einen Winkel δ zwischen größer 0° und 10°, vorzugsweise zwischen 5° und 6° aufweist.

16. Werkzeug nach einem der vorhergehenden Ansprüche, bei dem jeweils zwei jeweils eine Schnittkante (10) einer Schneide (4 bis 7) aufweisende Schnittbereiche (8) auf der Stirnseite auf einer Geraden (G1, G2) liegen, wobei zwei auf einer ersten Geraden (G1) liegende Schnittbereiche (8) ineinander übergehen und zwei auf einer die erste Gerade (G1) schneidenden zweiten Gerade (G2) liegende Schnittbereiche (8) im Bereich der Mittelachse (M) jeweils eine radial nach außen in Richtung der ersten Gerade (G1) verlaufende Ausnehmung (30, 31) aufweisen, die jeweils in einen Spanraum (22) übergeht, wobei vorzugsweise die Ausnehmung zwei im Wesentlichen V-förmige Teilbereiche (30, 31) aufweist.

17. Werkzeug nach Anspruch 16, welches wenigstens einen Kanal (40, 41) für die Zuführung von Kühlmittel zu den Schneiden (4 bis 7) aufweist, wobei der Kanal (40, 41) seine Mündung im Bereich einer Ausnehmung (31) und einer zweiten Stirnfreifläche (21) einer Schneide (4 bis 7) hat, deren Schnittbereich (8) auf der Stirnseite nicht in einen anderen Schnittbereich (8) übergeht, wobei vorzugsweise zwei Kanäle (40, 41) vorgesehen sind, deren Mündungen einander 180° gegenüber liegen.

18. Werkzeug nach einem der Ansprüche 1 bis 17, welches ein Torusfräser (1) ist.

19. Werkzeug nach einem der vorhergehenden Ansprüche, bei dem wenigstens eine Schnittkante wenigstens einer Schneide eine gewellte oder gezahnte Form aufweist oder eine Schruppverzahnung aufweist.

20. Werkzeug nach einem der vorhergehenden Ansprüche, bei dem wenigstens einer oder jeder Schneide (4 bis 7) ein Spanraum (22) zum Abführen von Spänen zugeordnet ist, wobei das Werkzeug zumindest in einem Teilbereich der Oberfläche des wenigstens einen Spanraumes, der in Kontakt mit den abgeführten Spänen treten kann und/oder der einer Spanleitfläche im Spanraum gegenüberliegt oder zugewandt ist und/oder der an einem Rücken einer Schneide, der dem Spanraum einer benachbarten Schneide zugewandt ist, angeordnet ist, eine geringe Oberflächenrauigkeit aufweist, wobei die mittlere Oberflächenrauigkeit Ra zwischen 0,03 µm und 0,10 µm und/oder die gemittelte Rautiefe Rz zwischen 0,10 und 0,35 µm und/oder die maximale Rautiefe Rmax zwischen 0,20 und 0,50 µm gewählt ist, wobei vorzugsweise die Oberfläche oder jeder Teilbereich der Oberfläche im Spanraum mit der geringen Oberflächenrauigkeit durch Schleifen oder Polieren oder Nachschleifen oder Nachpolieren mit einem entsprechend feinen Schleif- oder Polierwerkzeug erzeugt ist bzw. sind.

## Claims

1. Tool for chip removal, in particular milling tool, comprising
(a) a base part (2) and
(b) a head element (3) with a peripheral side and a face side,
(c) which base part (2) and head part (3) present a common centre axis (M),
(d) which head part (3) presents at least one cutting tool (4 to 7) with a cutting edge (11) on said peripheral side,
(e) wherein said cutting tool (4 to 7) presents a chip-guiding surface (15),
(f) the chip-guiding surface (15) includes two chip-guiding sub-surfaces (16, 17),
(g) wherein said first chip-guiding sub-surface (16) is disposed at a first chipping angle (γ₁) and said second chip-guiding sub-surface (17) is disposed at a second chipping angle (γ₂),
(h) wherein said first chip-guiding sub-surface (16) presents a camber (18),
(i) wherein, related to said first chipping angle (γ₁), said second chipping angle (γ₂) is wider,
(j) with said first chipping angle (γ₁) being selected from a range between 0° and 20° and with said second chipping angle (γ₂) corresponding to a value between 10° and 30°.

2. Tool according to Claim 1, wherein said cutting tool (4 to 7) comprises a cutting edge (10) on said face side, with said cutting edge (11) on said peripheral side of said cutting tool (4 to 7) passing preferably over into the cutting edge (10) of the face side of said cutting tool (4 to 7) and/or wherein said cutting edge (10) adjoins preferably the face side on said second chip-guiding sub-surface (17).

3. Tool according to Claim 1 or Claim 2, wherein said first chipping angle (γ₁) is selected from a range between 5° and 20° and preferably approximately 17°.

4. Tool according to any of the Claims 1 to 3, wherein said second chipping angle (γ₂) amounts to 24°.

5. Tool according to any of the Claims 1 to 4, wherein said first chip-guiding sub-surface (16) presents a width C between 0.2 and 1.5 mm in a radial sense towards said centre axis M.

6. Tool according to any of the Claims 1 to 5, wherein said second chip-guiding sub-surface (17) presents a camber (19),

7. Tool according to any of the Claims 1 to 6, wherein said cutting tool (4 to 7) comprises three flanks (12, 13, 14) on said peripheral side, whereof each presents a clearance angle (awl, α₂, α₃) relative to a cutting plane S of the peripheral side,
wherein preferably said first clearance angle (α₁) of said first flank (12) amounts to a value between 0.8° and 1.2°, preferably 1° and/or
wherein preferably said second clearance angle (α₂) of said second flank (13) amounts to a value between 10° and 18°, preferably 12° and/or
wherein preferably said third clearance angle (α₃) of said third flank (14) amounts to a value between 20° and 25°, preferably 1° and/or
wherein preferably said third flank (12) is dependent on the diameter D of said tool (1) along the peripheral direction and increases as the diameter D of said tool (1) increases, with the diameter D of said tool (1) amounting preferably to a value between 6 mm and 30 mm whilst the width B of said first flank (12) amounts to a value between 0.03 mm and 0.16 mm,
and/or
wherein said three flanks (12, 13, 14) are preferably substantially planar or present a slight concave curvature.

8. Tool according to any of the Claims 1 to 7, wherein said cutting tool (4 to 7) presents two face flanks (20, 21) on said face side, whereof each has a face clearance angle (β₁, β₁) relative to a cutting plane of said face side, with said first face clearance angle (β₁) of said first face flank (20) amounting preferably to a value between 7° and 15°, preferably 12°, and/or with said second face clearance angle (β₂) of said second face flank (21) amounting to a value between 15° and 30°, preferably 23°.

9. Tool according to Claim 2 or any of the Claims dependent on Claim 2, wherein said cutting edge (11) of said peripheral side of said cutting tool (4 to 7) passes over into said cutting edge (10) of the face side of said cutting tool (4 to 7) at a radius R, wherein the radius R amounts preferably to a value between 1.5 mm and 5 mm, preferably 4 mm, and/or wherein said first flank (12) on the peripheral side of said cutting tool (4 to 7) terminates preferably in said radius R, preferably after substantially two thirds of said radius R.

10. Tool according to any of the Claims 1 to 9, which comprises a plurality of cutting tools (4 to 7) having substantially the same configuration, preferably four, five or six cutting tools disposed about said centre axis (M).

11. Tool according to any of the Claims 1 to 10, wherein said cutting edge (11) is located on the peripheral side of said cutting tool (4 to 7) substantially on a shell of a cylinder.

12. Tool according to any of the preceding Claims, wherein a plurality of cutting tools (4 to 7) is provided which are disposed, relative to said centre axis (M), at two or more different pitch angles (ϕ₁, ϕ₂) relative to each other, wherein preferably the pitch angle (ϕ₁, (ϕ₂) between two successive cutting tools (4 to 7) amounts to a respective value between 60° and 120°,
wherein the tool comprises in particular four cutting tools (4 to 7), with the pitch angle (ϕ₁) between said first and second cutting tools (4, 5) and said third and fourth cutting tools (6, 7) corresponding each 80° whilst preferably the pitch angle (ϕ₂) between said second and third cutting tools (5, 6) and said fourth and first cutting tools (7, 4) corresponds each to 100° whilst the pitch angle (ϕ₁) between said first and second cutting tools and said third and fourth cutting tools corresponds to a respective value of 60° and said pitch angle (ϕ₂) between said second and third cutting tools and said fourth and first cutting tools corresponds to a respective value of 120°.

13. Tool according to any of the Claims 1 to 12, wherein said cutting edge (11) of said peripheral side of a cutting tool (4 to 7) extends along a helical path.

14. Tool according to Claim 13, wherein the helix angle (ε) of a cutting tool (4 to 7) ranges between 0° and 50°, preferably at 30°, and/or widens axially in a direction along said centre axis (M) of said face side, in particular from a helix angle of 0° to 25° on a cutting tool region remote from said face side up to a helix angle between 30° and 45° on said face side.

15. Tool according to any of the Claims 1 to 14, wherein a chip collection chamber (22) is associated with said cutting tool (4 to 7) for chip removal, wherein the volume of said chip collection chamber (22) is preferably reduced axially in a direction along said centre axis (M) towards said base part (2) and/or wherein said chip collection chamber (22) presents a substantially conical configuration, with the cone having an angle δ at a level between more than 0° and 10°, preferably between 5° and 6°.

16. Tool according to any of the preceding Claims, wherein two respective cutting regions (8) presenting each one cutting edge (10) of a cutting tool (4 to 7) are located on the face side of a straight line (G1, G2), with two cutting regions (8) located on a first straight line (G1) passing over into each other and with two cutting regions (8) that are located on a second straight line (G2) intersecting said first straight line (G1) comprising each a recess (30, 31) extending radially to the outside along the direction of said first straight line (G1), which recess passes over into a respective chip collection chamber (22), with the recess preferably comprising two substantially V-shaped sub-sections (30, 31).

17. Tool according to Claim 16, which comprises at least one passage (40, 41) for the supply of a refrigerating agent to said cutting tools (4 to 7), wherein said passage (40,41) has its opening in the region of a recess (31) and a second face flank (21) of a cutting tool (4 to 7), whose cutting region (8) on the face side does not pass over into another cutting region (8), wherein preferably two passages (40, 41) are provided whose openings are diametrically opposite to each other by 180°.

18. Tool according to any of the Claims 1 to 17, which is a torus milling cutter (1).

19. Tool according to any of the preceding Claims, wherein at least one cutting edge of at least one cutting tool presents an undulated or toothed shape or a roughing serration.

20. Tool according to any of the preceding Claims, wherein a chip collection chamber (22) is associated with at least one or each cutting tool for chip removal, with the tool being disposed at least in one sub-section of the surface of said at least one chip collection chamber, which may come into contact with the removed chips and/or which is opposite to or faces said one chip guiding surface in said chip collection chamber and/or which is disposed on a back of a cutting tool facing the chip collection chamber of an adjacent cutting tool, presents a low surface roughness, wherein the mean surface roughness Ra is a selected at a value between 0.03 µm and 0.10 µm and/or the averaged roughness depth Rz is selected at a value in the range between 0.10 and 0.35 µm and/or the maximum roughness depth Rmax is selected at a value between 0.20 and 0.50 µm, with the surface or each sub-section of the surface in the chip collection chamber, which has the low surface roughness, is or are preferably created respectively by grinding or polishing or regrinding or repolishing with an appropriate fine grinding or polishing tool.

## Revendications

1. Outil d'usinage par enlèvement de copeaux (1), en particulier un outil de fraisage, comportant:
a) une base (2) et
b) une tête (3) se rattachant à la base (2), pourvue d'une face circonférentielle et d'une face frontale,
c) lesquelles base (2) et tête (3) présentent un axe médian commun (M),
d) laquelle tête (3) présente au moins une lame (4 à 7) munie d'une arête de coupe (11) sur la face circonférentielle,
e) sachant que la lame (4 à 7) présente une surface de guidage des copeaux (15) adjacente à l'arête de coupe (11) de la face circonférentielle,
f) la surface de guidage des copeaux (15) comprend deux parties de surface de guidage des copeaux (16, 17),
g) sachant que la première partie de surface de guidage des copeaux (16) est disposée suivant un premier angle de coupe (γ₁) et la seconde partie de surface de guidage des copeaux (17) est disposée suivant un second angle de coupe (γ₂), **caractérisé en ce que**
h) la première partie de surface de guidage des copeaux (16) présente une convexité (18),
i) le second angle de coupe (γ₂) est plus élevé que le premier angle de coupe (γ₁),
j) le premier angle de coupe (γ₁) est choisi dans une plage comprise entre 0° et 20° et le second angle de coupe (γ₂) se situe entre 10° et 30°.

2. Outil selon la revendication 1, dans lequel la lame (4 à 7) comporte une arête de coupe (10) sur la face frontale, sachant que, de préférence, l'arête de coupe (11) de la face circonférentielle de la lame (4 à 7) rejoint l'arête de coupe (10) de la face frontale de la lame (4 à 7) et/ou sachant que, de préférence, l'arête de coupe (10) de la face frontale est adjacente à la seconde partie de surface de guidage des copeaux (17).

3. Outil selon la revendication 1 ou la revendication 2, dans lequel le premier angle de coupe (γ₁) est choisi dans une plage comprise entre 5° et 20° et s'élève de préférence à environ 17°.

4. Outil selon l'une quelconque des revendications 1 à 3, dans lequel le second angle de coupe (γ_{z}) est de 24°.

5. Outil selon l'une quelconque des revendications 1 à 4, dans lequel la première partie de surface de guidage des copeaux (16) présente, dans le sens radial, en direction de l'axe médian M, une largeur C comprise entre 0,2 et 1,5 mm.

6. Outil selon l'une quelconque des revendications 1 à 5, dans lequel la seconde partie de surface de guidage des copeaux (17) présente une convexité (19).

7. Outil selon l'une quelconque des revendications 1 à 6, dans lequel la lame (4 à 7) comporte, sur la face circonférentielle, trois faces de dépouille (12, 13, 14), chacune d'entre elles présentant un angle de dépouille (α₁, α₂, α₃) par rapport à un plan d'intersection S de la face circonférentielle, sachant que, de préférence, le premier angle de dépouille (α₁) de la première face de dépouille (12) est compris entre 0,8° et 1,2° et s'élève de préférence à 1°
et/ou
sachant que, de préférence, le second angle de dépouille (α₂) de la seconde face de dépouille (13) est compris entre 10° et 18° et s'élève de préférence à 12°
et/ou
sachant que, de préférence, le troisième angle de dépouille (α₃) de la troisième face de dépouille (14) est compris entre 20° et 25° et s'élève de préférence à 23°
et/ou
sachant que, de préférence, la largeur B de la première face de dépouille (12) est fonction du diamètre D de l'outil (1) dans le sens circonférentiel et augmente avec l'accroissement du diamètre D de l'outil (1), sachant que, de préférence, le diamètre D de l'outil (1) est compris entre 6 mm et 30 mm et la largeur B de la première face de dépouille (12) est comprise entre 0,03 mm et 0,16 mm
et/ou
sachant que, de préférence, les trois faces de dépouille (12, 13, 14) sont réalisées de manière sensiblement plane ou légèrement concave.

8. Outil selon l'une quelconque des revendications 1 à 7, dans lequel la lame (4 à 7) présente, sur la face frontale, deux faces de dépouille frontales (20, 21), chacune d'entre elles présentant un angle de dépouille frontal (β₁, β₂) par rapport à un plan d'intersection de la face frontale, sachant que, de préférence, le premier angle de dépouille frontal (β₁) de la première face de dépouille frontale (20) est compris entre 7° et 15° et s'élève de préférence à 12° et/ou le second angle de dépouille frontal (β₂) de la seconde face de dépouille frontale (21) est compris entre 15° et 30° et s'élève de préférence à 23°.

9. Outil selon la revendication 2 ou l'une quelconque des revendications relatives à la revendication 2, dans lequel l'arête de coupe (11) de la face circonférentielle de la lame (4 à 7) rejoint, dans un rayon R, l'arête de coupe (10) de la face frontale de la lame (4 à 7), sachant que, de préférence, le rayon R est compris entre 1,5 mm et 5 mm et s'élève de préférence à 4 mm et/ou sachant que, de préférence, la première face de dépouille (12) se termine, sur la face circonférentielle de la lame (4 à 7), dans le rayon R, de préférence principalement après deux tiers du rayon R.

10. Outil selon l'une quelconque des revendications 1 à 9, lequel comporte plusieurs lames (4 à 7) réalisées de manière sensiblement identique, de préférence quatre, cinq ou six lames, lesquelles sont agencées autour de l'axe médian (M).

11. Outil selon l'une quelconque des revendications 1 à 10, dans lequel l'arête de coupe (11) se trouve, sur la face circonférentielle de la lame (4 à 7), principalement sur l'aire latérale d'un cylindre.

12. Outil selon l'une quelconque des revendications précédentes, dans lequel on a prévu plusieurs lames (4 à 7) qui sont agencées les unes par rapport aux autres relativement à l'axe médian (M), suivant au moins deux pas angulaires différents (ϕ₁, ϕ₂), sachant que, de préférence, le pas angulaire (ϕ₁, ϕ₂), se trouvant entre deux lames successives (4 à 7), est compris entre 60° et 120°,
sachant que l'outil comporte en particulier quatre lames (4 à 7), sachant que, de préférence, le pas angulaire (ϕ₁) se trouvant entre la première et la seconde lame (4, 5) ainsi que la troisième et la quatrième lame (6, 7) s'élève à 80° respectivement et, de préférence, le pas angulaire (ϕ₂) se trouvant entre la seconde et la troisième lame (5, 6) ainsi que la quatrième et la première lame (7, 4) s'élève à 100° respectivement ou sachant que le pas angulaire (ϕ₁) se trouvant entre la première et la seconde lame ainsi que la troisième et la quatrième lame s'élève à 60° respectivement et le pas angulaire (ϕ₂) se trouvant entre la seconde et la troisième lame ainsi que la quatrième et la première lame s'élève à 120° respectivement.

13. Outil selon l'une quelconque des revendications 1 à 12, dans lequel l'arête de coupe (11) de la face circonférentielle d'une lame (4 à 7) s'étend de manière hélicoïdale.

14. Outil selon la revendication 13, dans lequel l'angle d'hélice (ε) d'une lame (4 à 7) est compris entre 0° et 50° et s'élève de préférence à 30° et/ou augmente dans le sens axial, en direction de l'axe médian (M), vers la face frontale, en particulier d'un angle d'hélice compris entre 0° et 25° sur une zone de la lame éloignée de la face frontale à un angle d'hélice compris entre 30° et 45° sur la face frontale.

15. Outil selon l'une quelconque des revendications 1 à 14, dans lequel on a attribué à la lame (4 à 7) un espace à copeaux (22) pour l'évacuation des copeaux, sachant que le volume de l'espace à copeaux (22) se rétrécit de préférence dans le sens axial, en direction de l'axe médian (M), vers la base (2) et/ou sachant que l'espace à copeaux (22) est réalisé de manière sensiblement conique, sachant que le cône présente, par rapport à l'axe médian (M), un angle δ compris entre 0° et 10°, de préférence entre 5° et 6°.

16. Outil selon l'une quelconque des revendications précédentes, dans lequel deux zones de coupe (8), comportant chacune une arête de coupe (10) d'une lame (4 à 7), reposent, sur la face frontale, sur une droite (G1, G2), sachant que deux zones de coupe (8) reposant sur une première droite (G1) se rejoignent et deux zones de coupe (8) situées sur une seconde droite (G2), coupant la première droite (G1), comportent chacune, au niveau de l'axe médian (M), une cavité (30, 31) s'étendant dans le sens radial, vers l'extérieur, en direction de la première droite (G1), cavité qui rejoint un espace à copeaux (22), sachant que, de préférence, la cavité comporte deux zones (30, 31) sensiblement en forme de V.

17. Outil selon la revendication 16, lequel comporte au moins un canal (40, 41) pour l'amenée de réfrigérant jusqu'aux lames (4 à 7), sachant que le canal (40, 41) possède son embouchure au niveau d'une cavité (31) et d'une seconde face de dépouille frontale (21) d'une lame (4 à 7) dont la zone de coupe (8), sur la face frontale, ne rejoint pas une autre zone de coupe (8), sachant qu'on a prévu de préférence deux canaux (40, 41) dont les embouchures sont situées à 180° l'une par rapport à l'autre.

18. Outil selon l'une quelconque des revendications 1 à 17, lequel est une fraise torique (1).

19. Outil selon l'une quelconque des revendications précédentes, dans lequel au moins une arête de coupe d'au moins une lame présente une forme ondulée ou dentée ou une denture d'ébauche.

20. Outil selon l'une quelconque des revendications précédentes, dans lequel on a attribué à au moins une lame ou à chaque lame (4 à 7) un espace pour copeaux (22) pour l'évacuation de copeaux, sachant que l'outil est disposé au moins dans une zone de la superficie du ou des espaces à copeaux qui peut venir en contact avec les copeaux évacués et/ou qui fait face à ou est tournée vers une surface de guidage des copeaux dans l'espace pour copeaux et/ou qui est disposée sur le dos d'une lame qui est tourné vers l'espace à copeaux d'une lame adjacente, présente une faible rugosité de surface, sachant que la rugosité de surface moyenne Ra est comprise entre 0,03 µm et 0,10 µm et/ou la profondeur moyenne de la rugosité Rz est comprise entre 0,10 et 0,35 µm et/ou la profondeur maximale de rugosité Rmax est comprise entre 0,20 et 0,50 µm, sachant que, de préférence, la superficie ou chaque zone, se trouvant dans la superficie de l'espace à copeaux, est produite avec la faible rugosité de surface par ponçage ou polissage ou affûtage ou repolissage à l'aide d'un outil de ponçage ou de polissage à taille correspondante.
